# EUROPÄISCHE PATENTSCHRIFT

(11) **EP 3 668 777 B1**
(45) Veröffentlichungstag und Bekanntmachung des Hinweises auf die Patenterteilung: **13.01.2021**
(21) Anmeldenummer: 18756188.1
(22) Anmeldetag: 13.08.2018
(51) Int. Cl.: B60R 19/12, B62D 21/15, B62D 25/08, B60R 19/34

(54) **FAHRZEUGLÄNGSTRÄGERANORDNUNG**
VEHICLE LONGITUDINAL BEAM ARRANGEMENT
ARRANGEMENT DE LONGERON POUR VÉHICULE

(30) Priorität: 14.08.2017 DE 102017118515
(43) Veröffentlichungstag der Anmeldung: 24.06.2020
(73) Patentinhaber: Kirchhoff Automotive Deutschland GmbH, 57439 Attendorn (DE)
(72) Erfinder: GÜNTHER, Alexander, 57462 Olpe (DE); SCHMITT, Maria, 57439 Attendorn (DE); TÖLLER, Marco, 51107 Köln (DE)
(74) Vertreter: Haverkamp, Jens
(86) Internationale Anmeldenummer: PCT/EP2018/071940
(87) Internationale Veröffentlichungsnummer: WO 2019/034618

(56) Entgegenhaltungen:
- EP-A1- 0 980 815
- EP-A1- 1 388 485
- CN-B- 102 785 701
- DE-A1-102004 028 161
- DE-A1-102015 008 443
- US-B1- 8 720 983

## Beschreibung

Gegenstand der Erfindung ist eine Fahrzeuglängsträgeranordnung mit zwei in z-Richtung voneinander beabstandeten, im Falle eines Aufpralls zur Energieabsorption ausgelegten Längsträgern und mit einem Verbindungsbauteil mit seiner Haupterstreckung in einer Ebene und mit einem oberen Anschlussabschnitt und einem unteren Anschlussabschnitt, durch das die Längsträger miteinander verbunden sind, und mit den weiteren Merkmalen des Oberbegriffs des Anspruchs 1.

Längsträgeranordnungen im Bereich der Fahrzeugenden, vor allem im Vorderwagen dienen dem Zweck, im Falle eines Aufpralls die Aufprallenergie über mehrere Lastpfade in das Fahrzeug einzubringen. Eine derartige Fahrzeuglängsträgeranordnung umfasst typischerweise zumindest zwei einer Fahrzeugseite zugeordnete und in vertikaler Richtung (z-Richtung) übereinander mit Abstand zueinander angeordnete Längsträger. Diese können hinsichtlich ihrer Querschnittsgeometrie und ihrer Querschnittsfläche unterschiedlich ausgeführt sein. An zumindest einen Längsträger einer solchen Längsträgeranordnung ist unter Zwischenschaltung einer sogenannten Crashbox der Querträger eines Stoßfängers angeschlossen. Die Crashboxen der Längsträger sind Teil des Crashmanagements des Fahrzeuges und dienen im Falle eines Aufpralles ab einer gewissen Aufprallenergie zur Energieabsorption, indem diese durch die Aufprallenergie zumindest in einem Abschnitt plastisch deformiert werden. Auch die Längsträger sind in das Crashmanagement des Fahrzeuges eingebunden. Im Falle einer höheren Aufprallenergie, die bereits zu einer vollständigen Deformation der Crashboxen geführt hat, sollen auch die Längsträger Aufprallenergie durch Deformation absorbieren. Die Längsträger auf jeder Fahrzeugseite sind auch insofern in das Crashmanagement eingebunden, um die Energie eines Aufpralls über mehrere Lastpfade in die Karosserie einzuleiten. Bei einer solchen Ausgestaltung sind zumindest zwei in z-Richtung übereinander angeordneten Längsträger vorgesehen, die jeweils durch ein Verbindungsbauteil miteinander verbunden sind.

DE 10 2014 219 433 A1 offenbart eine Karosserieanordnung für einen Vorderwagen eines Kraftfahrzeugs. Diese Karosserieanordnung hat eine untere Hauptlängsträgeranordnung, an deren vorderen Ende ein Stoßfängerquerträger angeordnet ist, eine obere Trägeranordnung, die oberhalb einer Radaufhängung verläuft, und ein Zugband, das an einer ersten Befestigungsstelle an einem vorderen Bereich der Hauptlängsträgeranordnung und an einer zweiten Befestigungsstelle der oberen Trägeranordnung befestigt ist. Die obere Trägeranordnung ist mit einem Federbeinstützträger mit dem Längsträger verbunden. An das in Fahrtrichtung weisende Ende des Längsträgers ist eine Crashbox angeschlossen, die einen Stoßfängerquerträger trägt. Eine Stoßabsorption erfolgt bei dieser vorbekannten Karosserieanordnung in der Crashbox. Die in den Längsträger eingeleitete Energie wird durch den Federbeinstützträger in zwei übereinanderliegende Lastpfade aufgeteilt. In die Energieabsorption ist der Längsträger mit seiner oberen Trägeranordnung nicht eingebunden.

Aus DE 10 2006 041 092 B4 ist eine Knautschzone einer Karosserie eines Kraftwagens mit einem Karosseriebauteil bekannt, welches Karosseriebauteil eine Mehrzahl von Hohlkammern umfasst und somit als Deformationselement ausgebildet ist, um so zur Verlängerung der Knautschlänge der Knautschzone der Kraftwagenkarosserie beizutragen. Ferner verfügt dieses Karosseriebauteil über einen Stützbereich, welcher in einem Abstand zu dem zugeordneten Ende des Trägerprofils angeordnet ist, wobei das Trägerprofil bei einer unfallbedingten Kraftbeaufschlagung an dem Stützbereich des Karosseriebauteils zusätzlich abgestützt ist. Diese Knautschzone befindet sich unmittelbar angrenzend an die Fahrgastzelle. Aufgrund ihrer Ausgestaltung wird innerhalb der Knautschzone Aufprallenergie in zwei horizontal voneinander beabstandete Lastpfade geteilt. Bei diesem Stand der Technik handelt es sich nicht um eine Fahrzeuglängsträgeranordnung mit zwei übereinanderliegenden Längsträgern.

DE 601 26 209 T2 offenbart eine Aufbaustruktur mit verstärktem, unterem Längsträger, welcher unterer Längsträger über Bolzen mit einem oberen Längsträger verbunden ist. Aufgrund dieser Verbindung der beiden Längsträger in unterschiedlichen Ebenen wird eine Aussteifung der Aufbaustruktur für ein Kraftfahrzeug bewirkt, welches die Aufnahmefähigkeit von Deformationsenergie herabsetzt. Damit ist diese Aufbaustruktur nicht zur Aufnahme von Energie durch Deformation und somit in das aktive Crashmanagement eingebunden.

Aus DE 103 35 257 A1 ist ein Frontend einer Kraftwagenkarosserie bekannt, welches eine besonders einfache und gewichtssparende Bauweise des Frontends ermöglicht. Dabei wird eine Verstärkungsanordnung eingesetzt, die einen Kühlerquerträger und einen Stoßfängerquerträger miteinander verbindet. Auch dieser Stand der Technik betrifft somit keine Fahrzeuglängsträgeranordnung mit zwei übereinander angeordneten Längsträgern.

Aus WO 2016/207038 A2 ist eine Abstützeinrichtung für einen Vorderwagen eines Personenkraftfahrzeuges bekannt, mit der drei in z-Richtung übereinander angeordnete Längsträger mittels eines Verbindungsbauteils miteinander verbunden sind. Dieses vorbekannte Verbindungsbauteil ist an die Stirnseiten der Längsträger angeschlossen. Bei diesem Bauteil handelt es sich um ein solches komplexer Geometrie. Dieses Verbindungsbauteil dient dem Zweck, die Längsträger an ihrem vorderen, von der Karosserie wegweisenden Ende in einem definierten Abstand zu halten, um ein Ausknicken eines Längsträgers gegenüber dem oder den anderen bei einem Aufprall zu verhindern.

Aus DE 10 2013 207 236 A1 ist eine weitere Fahrzeuglängsträgeranordnung bekannt, bei der zwei in z-Richtung übereinander angeordnete Längsträger je Fahrzeugseite durch ein Verbindungsbauteil miteinander verbunden sind. Das Verbindungsbauteil ist an dem unteren Längsträger mit einer Materialschwächung angeschlossen, damit bei Überschreiten einer gewissen einzukoppelnden Energie diese nur noch in den unteren Längsträger eingebracht wird. Wird bei der Absorption von Aufprallenergie die Materialschwächung genutzt, wird die Energie nicht mehr aufgeteilt. Das Verbindungsbauteil gemäß diesem Stand der Technik ist außerhalb der für eine energieabsorbierende Deformation vorgesehenen Abschnittes des oberen Längsträgers angeordnet. Für eine erste Energieaufnahme ist bei der aus diesem Stand der Technik bekannten Fahrzeuglängsträgeranordnung der obere Längsträger endseitig teleskopartig ausgeführt, sodass eine Energieabsorption nicht zu einer Deformation führt. Vielmehr wird bei dieser Ausgestaltung die Energie durch Ineinanderschieben der beiden Längsträgerprofilabschnitte aufgezehrt. Erst anschließend unterliegt auch der obere Längsträger im Aufprallfalle einer Deformation. Dies hat zur Folge, dass eine Krafteinleitung über mehrere Lastpfade erst dann eintritt, wenn der äußere Längsträgerabschnitt in den dahinter befindlichen teleskopartig eingeschoben ist.

Wünschenswert wäre jedoch eine Krafteinleitung über mehrere Lastpfade in die Karosserie des Fahrzeuges, auch bereits bei einer geringeren Aufprallenergie. Dieses ist bei dem aus WO 2016/207038 A2 vorbekannten Verbindungsbauteil der Fall. Diese vorbekannte Fahrzeuglängsträgeranordnung verfügt über jeweils eine sich über eine gewisse Längserstreckung erstreckende Aufnahme zur Aufnahme jedes Längsträgers. Die Längsträger sind somit in demjenigen Abstand, mit dem diese in das Verbindungsbauteil eingreifen, durch dieses nicht nur miteinander verbunden, sondern auch versteift, sodass diese Länge in Fahrzeuglängsrichtung (x-Richtung) für eine Energieabsorption durch Deformation nicht zur Verfügung steht. Um dennoch denselben Deformationsweg bereitzustellen, wie eine Ausgestaltung ohne ein solches Verbindungsbauteil, muss der Fahrzeugüberhang entsprechend länger bemessen sein.

US 8,720,983 B1 offenbart eine Fahrzeuglängsträgeranordnung mit den Merkmalen des Oberbegriffs des Anspruchs 1. Bei dieser Fahrzeuglängsträgeranordnung ist das Verbindungsbauteil an die Längsträger in einer Art und Weise angeschlossen, dass dieser erwartungsgemäß der am meisten gefährdete tragende Abschnitt ausgebildet ist, Kräfte direkt weiterzuleiten. Aus diesem Grunde ist das Verbindungsbauteil mit den Längsträgern verschweißt und verschraubt. Überschreiten die anliegenden Kräfte die Verbindung zwischen dem Verbindungsteil und zumindest einem der Längsträger, reißt die Verbindung ab.

Ausgehend von dem vorstehend skizzierten Stand der Technik liegt der Erfindung somit die Aufgabe zugrunde, eine Fahrzeuglängsträgeranordnung vorzuschlagen, bei der zwei in z-Richtung übereinander angeordnete Längsträger durch ein Verbindungsbauteil miteinander verbunden sind, welches eine Energieabsorption durch plastische Deformation der Längsträger nicht in nennenswerter Weise beeinflusst, sodass mit dieser Fahrzeuglängsträgeranordnung der Fahrzeugüberhang trotz Vorsehens eines zwei übereinander angeordnete Längsträger verbindenden Verbindungsbauteils nicht, jedenfalls nicht nennenswert, verlängert ausgelegt sein muss und welches gegenüber der nächstkommenden Fahrzeuglängsträgeranordnung gemäß dem Stand der Technik eine optimierte Krafteinleitung gewährleistet, damit die Funktion der Verbindung der beiden Längsträger erhalten bleibt.

Gelöst wird diese Aufgabe erfindungsgemäß durch eine eingangs genannte, gattungsgemäße Fahrzeuglängsträgeranordnung, bei der das Verbindungsbauteil in seinem zwischen den Anschlusspunkten befindlichen Abschnitt in Richtung der Längserstreckung der Längsträger zur Absorption von Aufprallenergie gegenüber den die Anschlusspunkte tragenden Abschnitten schwächer ausgelegt ist.

Bei dieser Fahrzeuglängsträgeranordnung ist das Verbindungsbauteil mit seiner Haupterstreckungsebene parallel zur Längserstreckung der Längsträger angeordnet. Das Besondere an dieser Fahrzeuglängsträgeranordnung ist, dass das Verbindungsbauteil mit seinem oberen Anschlussabschnitt und mit seinem unteren Anschlussabschnitt nur mittels in Längserstreckung der Längsträger voneinander beabstandeter Anschlusspunkte mit dem jeweiligen Längsträger verbunden ist. Zwischen zwei Anschlusspunkten ist das Verbindungsbauteil hingegen nicht mit dem Längsträger verbunden. Das Verbindungsbauteil selbst ist in seiner Haupterstreckungsebene und somit in Längserstreckung der durch dieses verbundenen Längsträger zur Absorption von Aufprallenergie ausgelegt. Das Vorsehen von zwei voneinander beabstandeten Anschlusspunkten am oberen und am unteren Anschlussabschnitt und das in Richtung der Energieabsorption der Längsträger ebenfalls zur Energieabsorption plastisch deformierbar ausgelegte Verbindungsbauteil ist somit Teil des Crashmanagements des Fahrzeuges. Zwischen den Anschlusspunkten können die Längsträger in der für sie vorgesehenen Art und Weise im Falle eines Aufpralles durch plastische Deformation Energie absorbieren. Durch das Verbindungselement ist beim Gegenstand der Erfindung eine solche plastische Deformation im Unterschied zu entsprechenden Anordnungen aus dem Stand der Technik nicht blockiert.

Mit der vorbeschriebenen Anordnung des Verbindungsbauteils mit der Ebene seiner Haupterstreckung in Längserstreckung der Längsträger ist ein Weg eingeschlagen worden, der sich mit Blick auf die zum Stand der Technik beschriebene Problematik einem Fachmann zunächst verwehrt war. Schließlich war bei dem Stand der Technik eine solche Maßnahme regelmäßig mit einer Blockade einer plastischen Deformation in dem Bereich des Verbindungsbauteils verbunden.

Durch eine solche Anordnung des Verbindungsbauteils zum Verbinden der beiden Längsträger sind diese zudem in Querrichtung (y-Fahrzeugrichtung) und auch in Richtung der Hochachse (z-Richtung) gegeneinander versteift. Somit wurde eine solche bevorzugte Querversteifung in geschickter Weise mit einer die Energieabsorption in längsaxialer Richtung nicht oder jedenfalls nicht nennenswert beeinträchtigendem Verbindungsbauteil kombiniert. Aus diesem Grunde kann ein solches Verbindungselement sich auch über eine größere Längserstreckung der Längsträger erstrecken. Dieses war zuvor, um den Fahrzeugüberhang nicht unnötig groß ausfallen zu lassen, nicht möglich.

Durch das Verbindungsbauteil wird in dem Abschnitt desselben, mit dem dieser mit dem Längsträger verbunden ist, eine Deformation derselben für eine Energieabsorption im Crashfalle nicht blockiert. Gleichwohl kann die Längserstreckung des Verbindungselementes benutzt werden, um das Crashmanagement der Fahrzeuglängsträgeranordnung progressiv auszulegen. Somit kann über die Konzeption des Verbindungsbauteils zusätzlich Einfluss auf das Crashverhalten genommen werden.

Die Anschlusspunkte des oberen Anschlussabschnittes und diejenigen des unteren Anschlussabschnittes fluchten vorzugsweise in z-Richtung miteinander.

Um den Längsträgerabschnitten, die zwischen den voneinander beabstandeten Anschlusspunkten angeordnet sind, eine größere Freiheit in Bezug auf ihre Deformation im Stoßabsorptionsfalle zu ermöglichen, ist in einer Weiterbildung vorgesehen, dass die Anschlussabschnitte durch sich in z-Richtung erstreckende Fortsätze gebildet sind. In diesen Fortsätzen sind die Anschlusspunkte angeordnet. Der an einen solchen Anschlussabschnitt angeschlossene Längsträger kann im Falle einer Deformation in den in Längserstreckung zwischen den Fortsätzen befindlichen Raum in einer Deformationsphase eingreifen und ist somit diesbezüglich nicht blockiert.

Das Verbindungsbauteil kann mit seinen beiden Anschlussabschnitten jeweils in derselben Ebene an die durch dieses miteinander verbundenen Längsträger angeschlossen sein, beispielsweise in der x-z-Ebene. In einer anderen Ausgestaltung ist vorgesehen, dass das Verbindungsbauteil an den einen Längsträger in einer ersten Ebene, beispielsweise in der x-z-Ebene und an den anderen Längsträger in einer anderen Ebene, beispielsweise in der x-y-Ebene, angeschlossen ist. Möglich ist auch eine Ausgestaltung, bei der das Verbindungsbauteil an dem oberen Längsträger beispielsweise in der x-z-Ebene und an den in Fahrtrichtung nach vorne weisenden Abschluss des anderen Längsträgers und somit in der y-z-Ebene angeschlossen ist. Letzteres ist insbesondere dann möglich, wenn der andere Längsträger, typischerweise der untere Längsträger beispielsweise ein in y-Richtung nach außen abragenden Querfortsatz aufweist, sodass sich das Verbindungsbauteil an dessen in Fahrtrichtung weisender Vorderseite an diesen angeschlossen werden kann. Die vorbeschriebenen Möglichkeiten des Anschlusses eines Verbindungsbauteils an die Längsträger in den beschriebenen Ebenen sind beispielhaft zu verstehen. In gleicher Weise kann das Verbindungsbauteil auch an den ersten Längsträger nicht nur in der beispielhaft beschriebenen x-z-Ebene, sondern auch in einer anderen Ebene angeschlossen sein.

Zur Unterstützung einer definierten Deformation des Verbindungsbauteiles im Falle einer Crashdeformation ist dieses zwischen den die Anschlusspunkte tragenden Abschnitten zur Absorption von Aufprallenergie nicht nur schwächer ausgelegt, sondern verfügt in einer Weiterbildung über zwischen den Anschlusspunkten vorgesehene Crashstrukturen. Diese können als Verprägungen, Sicken oder auch als Ausschnitte ausgeführt sein. Diese Aufzählung ist nicht abschließend. Eine Kombination dieser und weiterer Maßnahmen ist möglich. Beispielsweise kann das Verbindungsbauteil einen zentralen Ausschnitt aufweisen, durch den nicht nur das Gewicht des Verbindungsbauteils reduziert ist. Vielmehr ist hierdurch eine definierte Materialschwächung gegeben, wobei durch die verbliebenen, sich in x-Richtung erstreckenden Stege definierte Crashzonen gebildet sind. Zur Erzielung einer erhöhten Steifigkeit des Verbindungsbauteils ist in einer Ausführungsform vorgesehen, dass der Ausschnitt von einer umlaufenden nach Art einer Verkröpfung ausgeführten Verprägung eingefasst ist. Durch die Verprägung ist der Randbereich des Ausschnittes versteift.

Das Verbindungsbauteil selbst kann ein Stahlblechbauteil sein, welches in seine gewünschte Form durch einen Umformvorgang gebracht ist. Im Zuge einer solchen Umformung kann auch die vorgenannte Verprägung bereitgestellt worden sein, ebenso wie ein ganz oder teilweise umlaufender abgekanteter Rand. Ein Einsatz von Verbindungsbauteilen aus einem anderen geeigneten Material, wie beispielsweise einem Leichtmetall, wie etwa einer Aluminiumlegierung oder auch einem Verbundwerkstoff sind ebenso möglich.

Das vorbeschriebene Konzept der Auslegung eines Verbindungsbauteils lässt sich in gleicher Weise auch einsetzen, wenn mehr als zwei Längsträger, also beispielsweise drei, in z-Richtung übereinander angeordnete Längsträger miteinander verbunden werden sollen.

Die im Rahmen dieser Ausführungen benutzten Richtungsangaben, und zwar die x-Richtung, die y-Richtung und die z-Richtung beziehen sich auf die Hauptrichtungen eines Fahrzeuges, die somit auch für die beschriebene Fahrzeuglängsträgeranordnung gelten. Dabei ist die x-Richtung die Fahrzeuglängserstreckung, die y-Richtung die Richtung in der Breite des Fahrzeuges und die z-Richtung die Richtung in Richtung der Hochachse.

Nachfolgend ist die Erfindung anhand eines Ausführungsbeispiels unter Bezugnahme auf die beigefügten Figuren beschrieben. Es zeigen:
- **Fig. 1:**: eine schematisierte Seitenansicht einer Fahrzeuglängsträgeranordnung mit einem daran angeschlossenen Stoßfängerquerträger,
- **Fig. 2:**: ein in der Fahrzeuglängsträgeranordnung der Figur 1 eingesetztes Verbindungsbauteil in einer perspektivischen Ansicht,
- **Fig. 3:**: in einer perspektivischen Detaildarstellung die Fahrzeuglängsträgeranordnung der Figur 1 ohne Stoßfängerquerträger und
- **Fig. 4:**: eine perspektivische schematisierte Ansicht einer weiteren Fahrzeuglängsträgeranordnung.

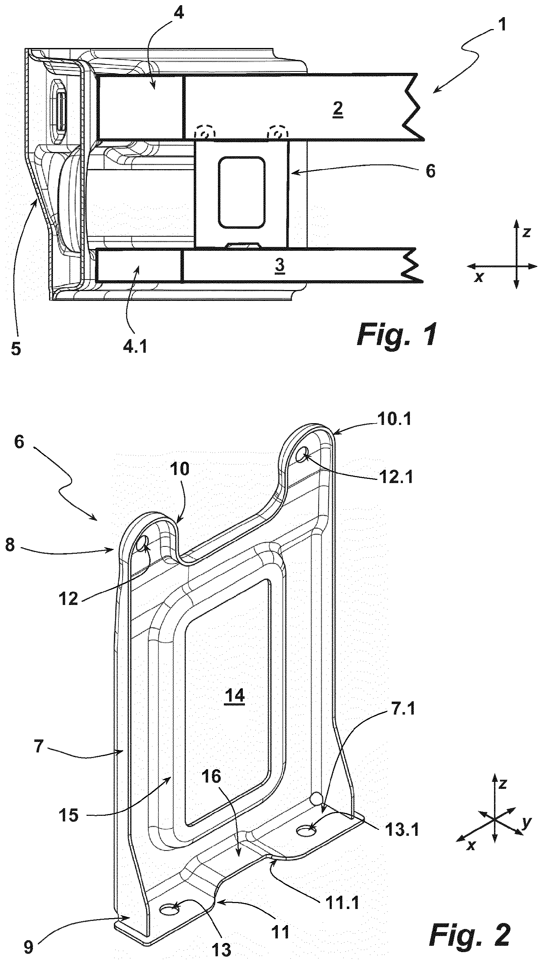

Eine Fahrzeuglängsträgeranordnung 1 befindet sich im rechten und linken Seitenbereich eines im Übrigen nicht näher dargestellten Fahrzeuges. Figur 1 zeigt eine solche Fahrzeuglängsträgeranordnung 1, die sich im Bereich der in Fahrtrichtung weisenden rechten Seite eines im Übrigen nicht näher dargestellten Fahrzeuges befindet. Die Längsträgeranordnung 1 umfasst einen oberen Längsträger 2 und einen unteren Längsträger 3. Die Längsträger 2, 3 sind in z-Richtung voneinander beabstandet. Die Querschnittsfläche des oberen Längsträgers 2 ist bei dem dargestellten Ausführungsbeispiel deutlich größer als diejenige des unteren Längsträgers 3. Daher wird durch den Längsträger 2 der Hauptlastpfad, über den Energie im Falle eines Aufpralls in die übrigen Karosseriebestandteile des Fahrzeuges eingekoppelt wird. Die Längsträger 2, 3 sind unter Zwischenschaltung von Crashboxen 4, 4.1 an einen Stoßfängerquerträger 5 angeschlossen. Die Crashboxen 4, 4.1 der Längsträger 2, 3 sind ausgelegt, um bei einem Aufprall ab einer bestimmten Aufprallstärke die Aufprallenergie durch plastische Deformation zu absorbieren.

Auf den Stoßfängerquerträger 5 einwirkende Aufprallenergie wird in die beiden Längsträger 2, 3 eingekoppelt. Im Falle einer zu absorbierenden Energie soll der Abstand der beiden Längsträger in z-Richtung konstant bleiben. Mithin soll ein Ausknicken in z-Richtung des einen Längsträgers 2, 3 gegenüber dem anderen vermieden werden. Um dieses zu gewährleisten sind die beiden Längsträger 2, 3 im Bereich ihrer an die Crashboxen 4, 4.1 grenzenden Abschnitten durch ein Verbindungsbauteil 6 miteinander verbunden. Das Verbindungsbauteil 6 ist detaillierter in der Figur 2 dargestellt. Das Verbindungsbauteil 6 des dargestellten Ausführungsbeispiels ist ein umgeformtes Stahlblechbauteil und weist eine flächige Erstreckung auf. Dieses ist die Haupterstreckungsebene des Verbindungsbauteils 6. Diese befindet sich in der Längsträgeranordnung 1 in der x-z-Ebene. Das Verbindungsbauteil 6 weist einen umlaufend gegenüber der flächigen Erstreckung abgekanteten Rand 7, 7.1 auf. Der gegenüber der Haupterstreckungsebene des Verbindungsbauteils 6 abgekantete Rand 7 dient zur Versteifung des Verbindungsbauteils 6.

Das Verbindungsbauteil 6 verfügt über einen oberen Anschlussabschnitt 8 und einen unteren Anschlussabschnitt 9. Mit dem oberen Anschlussabschnitt 8 ist das Verbindungsbauteil 6 mit dem oberen Längsträger 2 und mit seinem unteren Anschlussabschnitt 9 mit dem unteren Längsträger 3 verbunden. Bei dem dargestellten Ausführungsbeispiel ist jeder Anschlussabschnitt jeweils durch zwei, in x-Richtung voneinander beabstandete Fortsätze 10, 10.1, 11, 11.1 gebildet. Jeder Fortsatz 10, 10.1, 11, 11.1 weist einen Anschlusspunkt 12, 12.1, 13, 13.1 auf, an bzw. mit dem das Verbindungsbauteil 6 mit dem jeweiligen Längsträger 2 bzw. 3 verbunden ist. Bei dem dargestellten Ausführungsbeispiel sind die Anschlusspunkte 12, 12.1, 13, 13.1 durch kreisrunde Durchbrechungen bereitgestellt, damit das Verbindungsbauteil 6 durch mechanische Befestiger, beispielsweise Schrauben oder Nieten, mit dem jeweiligen Längsträger 2 bzw. 3 verbunden werden kann. Angeschlossen ist das Verbindungsbauteil 6 an die Längsträger 2, 3 ausschließlich an seinen Anschlusspunkten 12, 12.1, 13, 13.1. Die Fortsätze 10, 10.1, 11, 11.1 dienen zum einen dem Zweck, Raum für eine plastische Deformation des jeweils angrenzenden Längsträgers 2 bzw. 3 zu schaffen. Zum anderen wird hierdurch zwischen den Anschlusspunkten 12, 12.1, 13, 13.1 eine Zone ausgebildet, in der das Verbindungsbauteil 6 im Falle einer Energieabsorption plastisch verformt werden kann. Im Falle einer Energieabsorption durch plastische Verformung der Längsträger 2, 3 wird das Verbindungsbauteil 6 aus diesem Grunde zwischen seinen in z-Richtung übereinanderliegenden Anschlusspunkten 12, 13 bzw. 12.1, 13.1 ebenfalls deformiert und leistet damit einen Beitrag zu der durch plastische Deformation aufnehmbaren Energie bei.

Bei dem dargestellten Ausführungsbeispiel ist eine Faltenanlage zur Energieabsorption in dem zwischen den Anschlusspunkten 12, 13, 12.1, 13.1 liegenden Abschnitt des Verbindungsbauteils 6 auch dadurch begünstigt, dass das Verbindungsbauteil 6 einen zentralen Ausschnitt 14 als Crashstrukturelement aufweist. Der Ausschnitt 14 ist bei dem Verbindungsbauteil 6 etwa rechteckförmig ausgeführt. Zur Versteifung des Verbindungsbauteils in seinem zentralen Bereich in seiner Haupterstreckungsebene ist die Aussparung 14 von einer umlaufenden Verprägung 15 eingefasst. Die Verprägung 15 weist im Querschnitt die Form einer Verkröpfung auf. Diese Verprägung 15 verleiht dem Verbindungsbauteil 6 zusätzliche Steifigkeit. Dieses wirkt sich günstig auf die Verwindungssteifigkeit des Verbindungsbauteils 6 aus, wodurch die übereinanderliegenden Längsträger 2, 3 auch bei einer ungleichen Querbeanspruchung ihre bestimmungsgemäße Ausrichtung zueinander beibehalten.

Bei dem dargestellten Ausführungsbeispiel ist der Rand 7 zur Ausbildung der Fortsätze 11, 11.1 mit den Anschlusspunkten 13, 13.1 als Abkantung aus der ursprünglichen Platine ausgeführt. Der übrige Rand 7 des Verbindungsbauteils 6 ist im Zuge des Formgebungsverfahrens zum Herstellen des Verbindungsbauteils 6 aus einer Stahlplatine erstellt worden, ebenso wie die Verprägung 15. Die Ausbildung des unteren, zum Anschluss an den Träger 3 vorgesehenen Randes 7.1 mit der größeren Randbreite dient zum Bereitstellen einer größerflächigen Anlage. Von Bedeutung ist, dass die beiden Fortsätze 11, 11.1 durch eine Sicke 16 voneinander getrennt sind.

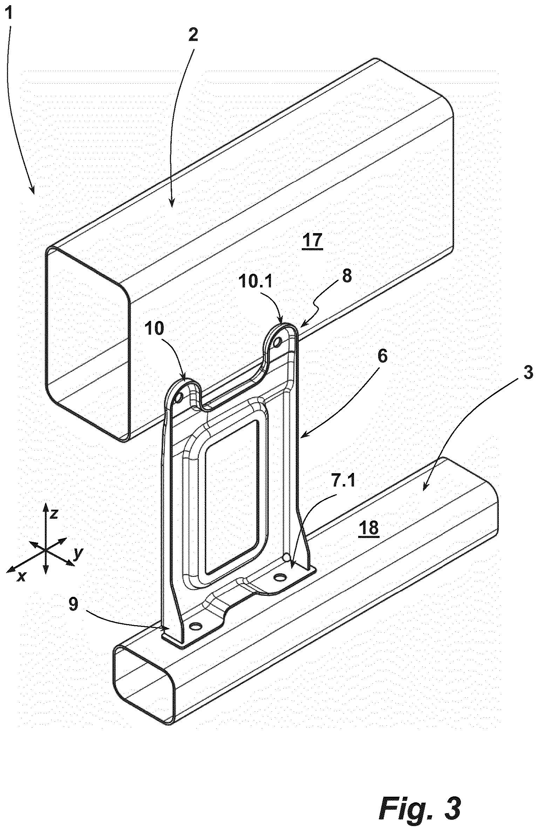

Die Längsträgeranordnung 1 mit seinem die Längsträger 2, 3 verbindenden Verbindungsbauteil 6 ist in der perspektivischen Darstellung in Figur 3 gezeigt. Bei dem dargestellten Ausführungsbeispiel ist das Verbindungsbauteil 6 mit seinem oberen Anschlussabschnitt 8 an eine in der x-z-Ebene befindliche Seitenwand 17 des oberen Längsträgers 3 angeschlossen. Die Darstellung der Figur 3 macht deutlich, dass nur die den oberen Anschlussabschnitt 8 bildenden Fortsätze 10, 10.1 mit ihrer Flachseite an der Seitenwand 17 anliegen. Die zum Verbinden des Verbindungsbauteils 6 mit dem oberen Längsträger 2 eingesetzten Schraubverbinder sind in Figur 3 nicht gezeigt.

Das Verbindungsbauteil 6 ist mit seinem unteren Rand 7.1 an die Oberseite 18 des unteren Längsträgers 3 ebenfalls unter Einsatz von in der Figur nicht dargestellten Schraubverbindern angeschlossen. Die Oberseite 18 des Längsträgers 3 befindet sich in der x-y-Ebene.

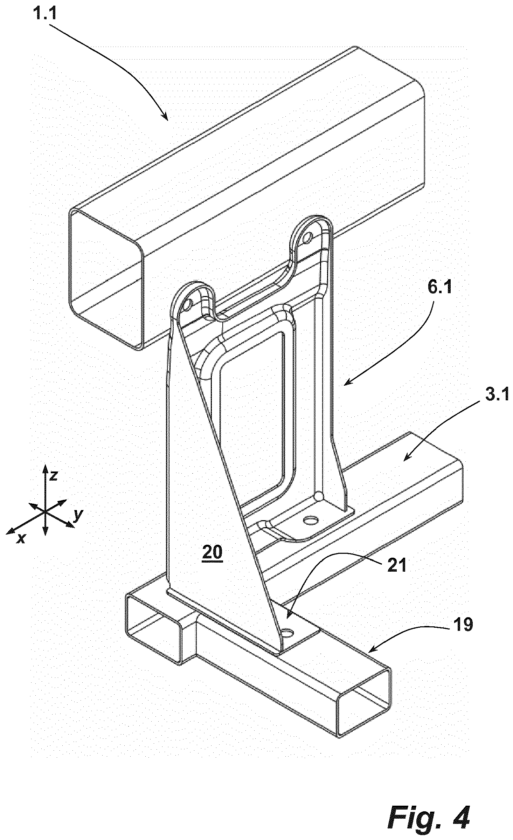

Figur 4 zeigt eine weitere Fahrzeuglängsträgeranordnung 1.1, die prinzipiell aufgebaut ist wie die in Figur 3 beschriebene. Die in Figur 4 gezeigte Fahrzeuglängsträgeranordnung 1.1 zeigt eine solche, die auf der in Fahrtrichtung des Fahrzeuges linken Fahrzeugseite angeordnet ist. Daher gelten die Ausführungen zu der Fahrzeuglängsträgeranordnung 1 für die Fahrzeuglängsträgeranordnung 1.1 gleichermaßen. Die Fahrzeuglängsträgeranordnung 1.1. unterscheidet sich von der Fahrzeuglängsträgeranordnung 1 dadurch, dass an den beiden unteren Längsträgern 3.1 jeweils ein in y-Richtung nach außen weisender Querfortsatz 19 angeordnet ist. Dieser Querfortsatz 19 stützt sich im Falle eines Crashes an einem in Fahrtrichtung (x-Richtung) dahinterliegenden Rad ab (nicht gezeigt). Diese Ausgestaltung des unteren Längsträgers 3.1 wird zur Anbindung des Verbindungsbauteils 6.1 an dem unteren Längsträger 3.1 mit seinem Querfortsatz 19 genutzt. Das Verbindungsbauteil 6.1 ist als Winkelverbindungsbauteil ausgeführt. Sein Hauptteil entspricht dem Verbindungsbauteil 6. Bei dem Verbindungsbauteil 6.1 ist der zum Stoßfängerquerträger 5 weisende und sich in der y-z-Ebene erstreckende Rand verlängert ausgeführt und erstreckt sich als Wand 20 über den Querfortsatz 19. Die Wand 20 verläuft, wie aus Figur 4 erkennbar, in der y-z-Ebene. Das Verbindungsbauteil 6.1 ist mit einem an die Wand 20 angeformten unteren Rand 21 an dem Querfortsatz 19 befestigt. Durch diese Ausgestaltung wird die Anbindungsfläche des Verbindungsbauteils 6.1 an der unteren Längsträgeranordnung 3.1, 19 vergrößert, ohne jedoch das Deformationsverhalten in x-Richtung zu beeinträchtigen. Durch die winklige Ausgestaltung des Verbindungsbauteils 6.1 ist die Fahrzeuglängsträgeranordnung 1.1 verbindungssteifer.

Die Beschreibung der Fahrzeuglängsträgeranordnungen 1, 1.1 macht deutlich, dass durch das jeweilige Verbindungsbauteil 6 bzw. 6.1 die vorgesehene plastische Deformation der mit diesem verbundenen Längsträger 2, 3 nicht bzw. so gut wie nicht beeinträchtigt ist. Daher kann das Verbindungsbauteil 6 bzw. 6.1 durchaus auch eine größere Länge in x-Richtung aufweisen.

In einer in den Figuren nicht dargestellten Ausgestaltung ist ein solches Verbindungsbauteil mit der doppelten Länge in x-Richtung ausgeführt. Dieses Verbindungsbauteil verfügt über einen oberen Anschlussabschnitt und einen unteren Anschlussabschnitt mit drei voneinander beabstandeten Anschlusspunkten. Es versteht sich, dass ein solches Verbindungsbauteil durchaus auch noch weitere Anschlusspunkte im oberen und unteren Anschlussabschnitt aufweisen kann, um auf diese Weise die Längserstreckung desselben zu vergrößern.

In derselben Weise können auch mehr als zwei in z-Richtung übereinander angeordnete Längsträger miteinander verbunden sein.

Die beschriebene Fahrzeuglängsträgeranordnung kann sowohl fahrzeugfrontseitig als auch fahrzeugheckseitig eingesetzt sein.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten, die Erfindung umsetzen zu können, ohne dass dieses im Rahmen dieser Ausführungen näher erläutert werden müsste.

### Bezugszeichenliste

- 1, 1.1: Fahrzeuglängsträgeranordnung
- 2: oberer Längsträger
- 3, 3.1: unterer Längsträger
- 4,4.1: Crashbox
- 5: Stoßfängerquerträger
- 6,6.1: Verbindungsbauteil
- 7, 7.1: Rand
- 8: oberer Anschlussabschnitt
- 9: unterer Anschlussabschnitt
- 10, 10.1: Fortsatz
- 11, 11.1: Fortsatz
- 12, 12.1: Anschlusspunkt
- 13, 13.1: Anschlusspunkt
- 14: Ausschnitt
- 15: Verprägung
- 16: Sicke
- 17: Seitenwand
- 18: Oberseite
- 19: Querfortsatz
- 20: Wand

## Patentansprüche

1. Fahrzeuglängsträgeranordnung mit zwei in z-Richtung voneinander beabstandeten, im Falle eines Aufpralls zur Energieabsorption ausgelegten Längsträgern (2, 3, 3.1) und mit einem Verbindungsbauteil (6) mit seiner Haupterstreckung in einer Ebene und mit einem oberen Anschlussabschnitt (8) und einem unteren Anschlussabschnitt (9), durch das die Längsträger (2, 3, 3.1) miteinander verbunden sind, wobei das Verbindungsbauteil (6) mit seiner Haupterstreckungsebene parallel zur Längserstreckung der durch dieses verbundenen Längsträger (2, 3, 3.1) angeordnet ist, dass die beiden Anschlussabschnitte (8, 9) jeweils zwei in Längserstreckung der Längsträger (2, 3, 3.1) mit Abstand zueinander angeordnete Anschlusspunkte (12, 12.1, 13, 13.1) aufweisen, an denen das Verbindungsbauteil (6) mit dem jeweiligen Längsträger (2, 3, 3.1) verbunden ist, während der zwischen den Anschlusspunkten (12, 12.1, 13, 13.1) befindliche Verbindungsbauteilabschnitt nicht mit dem jeweiligen Längsträger (2, 3, 3.1) verbunden ist, **dadurch gekennzeichnet, dass** das Verbindungsbauteil (6) in seinem zwischen den Anschlusspunkten (12, 12.1, 13, 13.1) befindlichen Abschnitt in Richtung der Längserstreckung der Längsträger (2, 3, 3.1) zur Absorption von Aufprallenergie gegenüber den die Anschlusspunkte (12, 12.1, 13, 13.1) tragenden Abschnitten schwächer ausgelegt ist.

2. Längsträgeranordnung nach Anspruch 1, **dadurch gekennzeichnet, dass** jeder Anschlusspunkt (12, 12.1) des oberen Anschlussabschnittes (8) in z-Richtung des Verbindungsbauteils (6) mit einem Anschlusspunkt (13, 13.1) des unteren Anschlussabschnittes (9) fluchtet.

3. Längsträgeranordnung nach Anspruch 1 oder 2, **dadurch gekennzeichnet, dass** die Anschlussabschnitte (8, 9) sich in z-Richtung des Verbindungsbauteils (6) erstreckende, die Anschlusspunkte (12, 12.1, 13, 13.1) tragende Fortsätze (10, 10.1, 11, 11.1) aufweisen.

4. Längsträgeranordnung nach einem der Ansprüche 1 bis 3, **dadurch gekennzeichnet, dass** der obere Anschlussabschnitt (8) an dem oberen Längsträger (2) in einer anderen Ebene angeschlossen ist als der untere Anschlussabschnitt (9) an den unteren Längsträger (3, 3.1).

5. Längsträgeranordnung nach Anspruch 4, **dadurch gekennzeichnet, dass** das Verbindungsbauteil (6) mit seinem oberen Anschlussabschnitt (8) mit einer in y-Richtung weisenden Seitenfläche (17) des oberen Längsträgers (2) und mit seinem unteren Anschlussabschnitt (9) mit einer in z-Richtung weisenden Seitenfläche (18) des unteren Längsträgers (3, 3.1) verbunden ist.

6. Längsträgeranordnung nach einem der Ansprüche 1 bis 5, **dadurch gekennzeichnet, dass** das Verbindungsbauteil (6) zwischen seinen in Längserstreckung der Längsträger (2, 3, 3.1) beabstandeten Anschlusspunkten (12, 12.1, 13, 13.1) wenigstens eine Crashstruktur (14) zum Herbeiführen einer definierten Deformation im Energieabsorptionsfall aufweist.

7. Längsträgeranordnung nach Anspruch 6, **dadurch gekennzeichnet, dass** die wenigstens eine Crashstruktur als Einprägung (15), als Sicke und/oder als Ausschnitt (14) aus dem Verbindungsbauteil (6) ausgeführt ist.

8. Längsträgeranordnung nach Anspruch 6 oder 7, **dadurch gekennzeichnet, dass** das Verbindungsbauteil (6) ein umgeformtes Stahlblechbauteil mit einem gegenüber seiner flächigen Erstreckung abgekanteten Rand (7, 7.1) ist.

9. Längsträgeranordnung nach Anspruch 7 oder 8, **dadurch gekennzeichnet, dass** das Verbindungsbauteil (6) einen zentralen Ausschnitt (14) umfasst.

10. Längsträgeranordnung nach Anspruch 9, **dadurch gekennzeichnet, dass** der Ausschnitt (14) von einer umlaufenden Verprägung (15) eingefasst ist.

11. Längsträgeranordnung nach einem der Ansprüche 1 bis 10, **dadurch gekennzeichnet, dass** das Verbindungsbauteil 6.1 winklig ausgeführt ist und über eine in der y-z-Ebene verlaufende Wand (20) verfügt.

12. Längsträgeranordnung nach einem der Ansprüche 1 bis 11, **dadurch gekennzeichnet, dass** das Verbindungsbauteil (6) mit mechanischen Befestigern an die Längsträger (2, 3, 3.1) angeschlossen ist.

13. Längsträgeranordnung nach einem der Ansprüche 1 bis 12, **dadurch gekennzeichnet, dass** durch das Verbindungsbauteil drei in z-Richtung des Fahrzeuges voneinander beabstandete Längsträger miteinander verbunden sind und zu diesem Zweck in x-Richtung voneinander beabstandete Anschlusspunkte aufweist, um das Verbindungsbauteil an den in x-Richtung voneinander beabstandeten Anschlusspunkten an jeden Längsträger anschließen zu können.

14. Längsträgeranordnung nach einem der Ansprüche 1 bis 13, **dadurch gekennzeichnet, dass** das Verbindungsbauteil (6, 6.1) benachbart zu einer Crashbox (4, 4.1) an ihrem zur Karosserie weisenden Ende angeordnet sind.

## Claims

1. Vehicle longitudinal beam arrangement, having two longitudinal beams (2, 3, 3.1) spaced apart from each other in the z-direction and designed for energy absorption in case of an impact, and having a connection component (6) having its primary extension in one plane and with an upper connection portion (8) and a lower connection portion (9), via which the longitudinal beams (2, 3, 3.1) are connected to one another, wherein the connection component (6) is arranged with its primary extension plane parallel to the longitudinal extension of the longitudinal beams (2, 3, 3.1) connected by said component, and the two connection portions (8, 9) each have two connection points (12, 12.1, 13, 13.1) arranged at a distance from one another in the longitudinal extension of the longitudinal beams (2, 3, 3.1), on which the connection component (6) is connected to the respective longitudinal beam (2, 3, 3.1), while the connection component portion located between the connection points (12, 12.1, 13, 13.1) is not connected to the respective longitudinal beam (2, 3, 3.1), **characterised in that** the connection component (6) is designed to be weaker in the portion located between the connection points (12, 12.1, 13,13.1) in the direction of the longitudinal extension of the longitudinal beams (2, 3, 3.1) than the portions bearing the connection points (12, 12.1, 13, 13.1), for the absorption of impact energy.

2. Longitudinal beam arrangement according to claim 1, **characterised in that** each connection point (12, 12.1) of the upper connection portion (8) in the z-direction of the connection component (6) is flush with a connection point (13, 13.1) of the lower connection portion (9).

3. Longitudinal beam arrangement according to claim 1 or 2, **characterised in that** the connection portions (8, 9) comprise extensions (10, 10.1, 11, 11.1) supporting the connection points (12, 12.1, 13, 13.1) extending in the z-direction of the connection component (6).

4. Longitudinal beam arrangement according to any one of claims 1 to 3, **characterised in that** the upper connection portion (8) is connected to the upper longitudinal beam (2) in another plane than the lower connection portion (9) on the lower longitudinal beam (3, 3.1).

5. Longitudinal beam arrangement according to claim 4, **characterised in that** the connection component (6) is connected by its upper connection component (8) to a side surface (17) of the upper longitudinal beam (2) pointing in the y-direction, and by its lower connection component (9) to a side surface (18) of the lower longitudinal beam (3, 3.1) pointing in the z-direction.

6. Longitudinal beam arrangement according to any one of claims 1 to 5, **characterised in that** the connection component (6) comprises at least one crash structure (14) between its connection points (12, 12.1, 13, 13.1) spaced apart from one another in the longitudinal extension of the longitudinal beams (2, 3, 3.1), for inducing a defined deformation in the event of energy absorption.

7. Longitudinal beam arrangement according to claim 6, **characterised in that** the at least one crash structure is configured as a stamped impression (15), a crease, or as a cut-out (14) from the connection component (6).

8. Longitudinal beam arrangement according to claim 6 or 7, **characterised in that** the connection component (6) is a shaped sheet steel component with a shaped edge (7, 7.1) in relation to its flat extension.

9. Longitudinal beam arrangement according to claim 7 or 8, **characterised in that** the connection component (6) comprises a central cut-out (14).

10. Longitudinal beam arrangement according to claim 9, **characterised in that** the cut-out (14) is encompassed by a surrounding stamped impression (15).

11. Longitudinal beam arrangement according to any one of claims 1 to 10, **characterised in that** the connection component 6.1 is configured as angled, and is provided with a wall (20) running in the y-z plane.

12. Longitudinal beam arrangement according to any one of claims 1 to 11, **characterised in that** the connection component (6) is connected by mechanical securing means to the longitudinal beams (2, 3, 3.1).

13. Longitudinal beam arrangement according to any one of claims 1 to 12, **characterised in that** three longitudinal beams spaced apart from one another in the z-direction of the vehicle are connected to one another by the connection component, and for this purpose comprise connection points spaced apart from one another in the x-direction, in order for the connection component to be connected to the connection points, spaced apart from one another in the x-direction, on each longitudinal beam.

14. Longitudinal beam arrangement according to any one of claims 1 to 13, **characterised in that** the connection component (6, 6.1) is arranged adjacent to a crash box (4, 4.1) at its end pointing towards the vehicle body.

## Revendications

1. Arrangement de longeron pour véhicule comportant deux longerons (2, 3, 3.1) écartés l'un de l'autre dans la direction z, conformés en vue d'une absorption d'énergie en cas de collision et comportant une pièce de liaison (6), dont l'étendue principale est sur un plan et avec un tronçon de raccordement (8) supérieur et un tronçon de raccordement (9) inférieur, par laquelle les longerons (2, 3, 3.1) sont reliés l'un à l'autre, laquelle pièce de liaison (6) étant disposée avec son plan d'étendue principale parallèlement à l'étendue longitudinale des longerons (2, 3, 3.1) raccordés par celle-ci, de sorte que les deux tronçons de raccordement (8, 9) présentent deux points de raccordement (12, 12.1, 13, 13.1) disposés écartés l'un de l'autre, dans le sens de l'étendue longitudinale des longerons (2, 3, 3.1), par lesquels la pièce de liaison (6) est raccordée au longeron (2, 3, 3.1) respectif, tandis que le tronçon de pièce de liaison se trouvant entre les points de raccordement (12, 12.1, 13, 13.1) n'est pas raccordé au longeron respectif (2, 3, 3.1), **caractérisé en ce que** la pièce de liaison (6) est conformée plus faiblement dans son tronçon se trouvant entre les points de raccordement (12, 12.1, 13, 13.1), en direction de l'étendue longitudinale des longerons (2, 3, 3.1), afin d'absorber l'énergie de collision par rapport aux tronçons supportant ces points de raccordement (12, 12.1, 13, 13.1).

2. Arrangement de longeron selon la revendication 1, **caractérisé en ce que** chaque point de raccordement (12, 12.1) du tronçon de raccordement (8) supérieur s'aligne dans la direction z de la pièce de liaison (6) avec un point de raccordement (13, 13.1) du tronçon de raccordement (9) inférieur.

3. Arrangement de longeron selon la revendication 1 ou 2, **caractérisé en ce que** les tronçons de raccordement (8, 9) présentent des prolongements (10, 10.1, 11, 11.1), s'étendant dans la direction z de la pièce de liaison (6), supportant les points de raccordement (12, 12.1, 13, 13.1).

4. Arrangement de longeron selon l'une des revendications 1 à 3, **caractérisé en ce que** le tronçon de raccordement (8) supérieur est raccordé au longeron (2) supérieur dans un autre plan que le tronçon de raccordement (9) inférieur au longeron (3, 3.1) inférieur.

5. Arrangement de longeron selon la revendication 4, **caractérisé en ce que** la pièce de liaison (6) est reliée par son tronçon de raccordement (8) supérieur avec une surface latérale (17) orientée dans la direction y du longeron (2) supérieur et par son tronçon de raccordement (9) inférieur avec une surface latérale (18) orientée dans la direction z du longeron (3, 3.1) inférieur.

6. Arrangement de longeron selon l'une des revendications 1 à 5, **caractérisé en ce que** la pièce de liaison (6) présente entre ses points de raccordement (12, 12.1, 13, 13.1), écartés dans le sens de l'étendue longitudinale des longerons (2, 3, 3.1), au moins une structure de crash (14) destinée à provoquer une déformation définie en cas d'absorption d'énergie.

7. Arrangement de longeron selon la revendication 6, **caractérisé en ce que** l'au moins une structure de crash est réalisée sous forme de matriçage (15), de gorge et/ou de découpe (14) dans la pièce de liaison (6).

8. Arrangement de longeron selon la revendication 6 ou 7, **caractérisé en ce que** la pièce de liaison (6) est une pièce de tôle d'acier mise en forme comportant un bord (7, 7.1) replié par rapport à son étendue plane.

9. Arrangement de longeron selon la revendication 7 ou 8, **caractérisé en ce que** la pièce de liaison (6) comprend une découpe (14) centrale.

10. Arrangement de longeron selon la revendication 9, **caractérisé en ce que** la découpe (14) est sertie d'un matriçage (15) circulaire.

11. Arrangement de longeron selon l'une des revendications 1 à 10, **caractérisé en ce que** la pièce de liaison (6.1) est conformée en équerre et dispose d'une paroi (20) suivant le plan y-z.

12. Arrangement de longeron selon l'une des revendications 1 à 11, **caractérisé en ce que** la pièce de liaison (6) est raccordée aux longerons (2, 3, 3.1) par des fixations mécaniques.

13. Arrangement de longeron selon l'une des revendications 1 à 12, **caractérisé en ce que** trois longerons écartés l'un de l'autre dans la direction z du véhicule sont raccordés les uns aux autres par la pièce de liaison et qu'il présente à cet effet des points de raccordement écartés l'un de l'autre dans la direction x, afin de pouvoir raccorder la pièce de liaison avec les points de raccordement, écartés les uns des autres dans la direction x, sur chaque longeron.

14. Arrangement de longeron selon l'une des revendications 1 à 13, **caractérisé en ce que** la pièce de liaison (6, 6.1) est disposée au voisinage d'une crashbox (4, 4.1) à son extrémité orientée vers la carrosserie.
